# EUROPEAN PATENT SPECIFICATION

(11) **EP 0 783 410 B1**
(45) Date of publication and mention of the grant of the patent: **12.01.2000**
(21) Application number: 95933482.2
(22) Date of filing: 02.10.1995
(51) Int. Cl.: B41J 2/21

(54) **METHOD OF MULTI-TONE PRINTING**
DRUCKVERFAHREN MIT MEHREREN TONWERTEN
PROCEDE D'IMPRESSION MULTI-TEINTES

(30) Priority: 30.09.1994 US 316256
(43) Date of publication of application: 16.07.1997
(73) Proprietor: Xaar Technology Limited, Cambridge CB4 4FD (GB)
(72) Inventor: PATON, Anthony, David, Longstanton St.Michael,Cambridge CB4 5DW (GB)
(74) Representative: Garratt, Peter Douglas
(86) International application number: PCT/GB95/02335
(87) International publication number: WO 96/10488

(56) References cited:
- EP-A- 0 422 870
- EP-A- 0 602 582

## Description

This invention relates to multi-tone printing employing drop-on-demand printing apparatus. More particularly the invention relates to such apparatus for printing on printing element areas on a substrate and which comprises an array of parallel channels provided with respective ink ejection nozzles, a liquid supply means for each channel and electrically operated means for applying pulses of energy to liquid in said channels to effect ink ejection therefrom.

Aspects of such printing apparatus are described for example in United States Patent No. 4,584,590 and in the following United States Patents standing in the name of the present Applicant, the contents of which are herein incorporated by reference, that is to say: US-A-4,879,568, US-A-4,887,100; US-A-4,992,808; US-A-5,003,679; US-A-5,016,028 and US-A-5,028,936.

The types of printing apparatus disclosed in the references quoted are of the kind in which energy pulses are imparted to ink by displacement of wall portions of the respective ink channels. Typically, the parallel ink channels are separated by side walls which can be displaced in one sense to apply a pulse to one of the channels bounded by the wall, and in the opposite sense to apply a pulse to the other channel. This approach offers a number of key advantages and has led to the design of very efficient, high density, binary (or single tone) printheads.

This "sharing" of side wall actuators does, however, bring design constraints. The above mentioned art recognises, for example, that the two channels which "share" the dividing side wall, cannot be fired simultaneously. The art therefore proposes the solution of dividing the channels into two cycles, one cycle containing the even numbered channels, and the other cycle the odd. Only one of these cycles is enabled for firing at any one time and the printer driver operates in successive cycles at a rate which is slow enough to ensure that a channel has become quiescent before its neighbouring channels (belonging to the other cycle) are enabled for firing. The consequential time delay between firing of adjacent channels can be compensated for, if it would otherwise detract from print quality. One method of compensation is to offset spatially the nozzles corresponding with adjacent channels.

Binary or single-tone printing will not always suffice.

It is known that the human eye can sense sixty-four gradations of greyscale in multi-tone printing. It is even suggested that twice as many gradations can be discriminated. Accordingly, it is one aim of high quality tone printing, including colour printing, to produce a printer capable of printing a number of greyscale tones as near as possible to the discriminating capability of the eye of the viewer.

In US-A-4,513,299 there is disclosed a single channel, drop-on-demand ink jet printing device in which droplets of ink having different droplet volumes can be deposited on a print medium at a droplet repetition rate just below the resonant frequency of the ink channel. The different droplet volumes are achieved by following a droplet ejection pulse with additional droplet ejection pulses of like magnitude to the initial droplet ejection pulse at a frequency at or near the channel resonant frequency. The additional droplet ejection pulses cause ejection from the ink channel of further drop volumes of substantially the same size as the drop volume emitted from the channel by the initial droplet ejection pulse. In the series of drop volumes thus emitted, the second and subsequent drop volumes are each connected to the preceding drop volume emitted and the drop volumes join together to form an enlarged droplet which is deposited on the print medium. However, in high density array drop-on-demand printers, i.e. arrays of at least two parallel channels per mm, the known method of droplet ejection severely limits, to only a few, the number of droplet volumes which can be added to the droplet volume initially ejected from any particular channel. This number diminishes rapidly with increase of channel density. It follows that the number of greyscale gradations which can be achieved by this known method is limited in the achievable number of different drop volumes which can be deposited at a pixel of the printed image.

US-A-4,536,097 discloses a piezoelectric printhead having channels defined by a row of parallel piezoelectric strips which can be deformed in direct mode. Each working channel, with its two piezoelectric strips, is separated from the next by a dummy channel filled with elastomer or air and the arrangement is therefore limited as to the channel resolution that can be achieved. The printhead is not capable of producing drops of varying sizes.

GB-A-2 157 623 discloses a method of operating an ink jet apparatus to control dot size. Relatively small ink chambers have separate large piezoelectric transducers communicating with the respective chambers through a mechanical coupling including a foot and a diaphragm. It is proposed that by synchronously exciting either one or a combination of the fluid and mechanical resonant frequencies of the ink jet apparatus and by repeating this operation in an iterative or successive manner in synchronism with the dominant resonant frequency, a plurality of ink droplets can be ejected within a time period permitting the droplets to merge while airborne or upon the recording medium.

It has previously been recognised by the present inventor, that considerable advantage could be had if a method of multi-tone printing could be developed which adopted the approach outlined above for single-tone printing. Thus, EP-A-0 422 870 (which stands in the name of the present Applicant) discloses methods of multi-tone printing employing drop-on-demand printing apparatus comprising an array of like, uniformly-spaced, parallel ink channels. A channel which is in a cycle presently enabled for firing, will receive (depending upon the incoming print data) not just one pulse but a sequence of pulses, the number of which dictates the print density achieved. The sequence of pulses can be provided at a repetition rate which corresponds to the longitudinal acoustic resonant frequency of the channel. As before, interference with the neighbouring channel which may share the same wall actuator, is avoided by allowing a sufficient time interval before the cycle of channels containing the neighbouring channel, is enabled for firing. Preferably, the channels are arranged in three or more cycles.

The same document sets out an ingenious alternative which avoids this slow cycling between enabling of one channel and enabling of its neighbour. Instead, neighbouring channels are actuated (in dependence upon the print data) with respective, antiphase, resonant waveforms. Drops are therefore ejected from neighbouring channels in alternating phases of the resonant waveform. As is explained in the document, this alternative works at a higher speed than the first arrangement, essentially because the slow cycling has been avoided.

It is appropriate to manage the print data in a different way and the document introduces the notion of controlling bands of fired channels, which bands increase and decrease in width (or number of channels) as determined by the print data.

There is, strictly, a time delay between the firing of one channel and the firing of its neighbour. However, since this is half the period of the resonant frequency, it is very much smaller (perhaps two orders of magnitude) than the time delay associated with the cycles described above. It would be unusual for this small delay to affect print quality and compensation will not normally be required.

As acknowledged in the document, this alternative arrangement, whilst relatively fast, is limited in the range of patterns it will print at a given spatial frequency; in particular, it will print "white, black, white" but not "black, white, black" across the row of channels.

It is an object of the present invention to provide an improved method of greyscale printing which employs a drop-on-demand printer having an array of channels and which enables printing at high density and high speed of patterns having a higher spatial frequency than have previously been possible.

Accordingly, the present invention consists, in one aspect, in a method of multi-tone printing employing a drop-on-demand ink jet apparatus comprising an array of parallel channels, a series of nozzles which communicate respectively with said channels for ejection of ink therefrom, a source of ink connected with each channel, and electrically actuable means associated with the channels for applying pressure pulses to the channels, thereby to effect ink ejection therefrom;
the channels being arranged in at least two cycles, the channels belonging to any one cycle being interleaved with channels belonging to another cycle;
the channels of each cycle being further arranged in first and second groups, the method comprising the steps of
receiving print data;
successively enabling the cycles for ink ejection at a cycle enabling frequency;
for each cycle, selecting channels of the respective first and second groups for ink ejection in accordance with print data;
and actuating the electrically actuable means to apply sequences of pressure pulses to the selected channels at an operating frequency higher than said cycle enabling frequency, the number of pulses applied being varied to control the print density in accordance with the print data;
the pressure pulses applied to selected channels belonging to said first group being applied in antiphase to those applied to selected channels belonging to said second group;
thereby to effect ink ejection from said selected channels in antiphase between the first and second groups.

The operating frequency may be the longitudinal acoustic resonant frequency of the channels and is preferably no less than ½ or ¹/₃ that resonant frequency.

In another aspect, the present invention consists in a method of multi-tone printing employing drop-on-demand ink jet apparatus comprising an array of parallel channels; a series of nozzles which communicate respectively with said channels for the ejection of ink therefrom; ink source means connected with the channels; and a plurality of electrically actuable means, each electrically actuable means being associated with two of the said channels and each of said channels having two electrically actuable means corresponding thereto; each electrically actuable means being actuable in opposite senses to apply positive pressure to either one of the two channels with which it is associated and negative pressure to the other of the said two channels, a pressure pulse exceeding a defined ejection pressure threshold in any channel resulting in ink ejection from that channel; the method comprising the steps of arranging the channels in at least two cycles, arranging the channels of each cycle into two groups; receiving print data; successively enabling said cycles for ink ejection; for each cycle, selecting channels of the respective first and second groups for ink ejection in accordance with the print data and actuating electrically actuable means associated therewith to apply sequences of pressure pulses to the selected channels, the number of pulses applied being varied to control the print density in accordance with the print data, the pressure pulses applied to selected channels in said first group being in antiphase at an operating frequency to those applied to selected channels belonging to said second group, thereby to effect ink ejection from said selected channels in antiphase between the first and second groups, channels not in the currently enabled cycle receiving compensating positive and negative pressures from the two electrically actuable means corresponding thereto.

Embodiments of the present invention are accordingly able to achieve the high speed operation associated with antiphase operation of neighbouring (or other groupings) of channels, whilst avoiding the limitations of the prior art. The enabling and disabling of cycles of channels can ingeniously be achieved not as hitherto by disabling the drive signals to respective actuators, but by arranging for the two actuators associated with a particular channel to apply reinforcing or cancelling pressures. The notion of actuating walls moving in reinforcement for the enabled cycle and in cancellation for the or each other cycle, is an important feature of preferred forms of this invention. The channels can be assigned to two or more cycles and, within each cycle, into two antiphase groups in many ways.

The invention will now be described by way of example with reference to the accompanying drawings, in which:-
Figure 1 illustrates the effect of depositing in successive printing element areas (pixels), as the print medium moves past a nozzle of a channel of a drop-on-demand ink jet printer, a variable number of ink drops between 1 and 64;
Figure 2 illustrates drop-on-demand ink jet printing apparatus for use in accordance with the present invention;
Figure 3 shows a sectional view through ink jet printing apparatus as illustrated in Figure 2;
Figures 4-11 illustrate in stylised form the manner of operation of the printhead shown in Figure 2 according to alternative embodiments of the invention.

The method of the invention can be performed by a drop-on-demand ink jet printing apparatus comprising an array, preferably a high density array, of parallel channels provided with respective droplet ejection nozzles, an ink supply for each channel and electrically actuable means for applying pressure pulses to effect droplet ejection from the channels. Preferably, pressure pulses are applied by displacing piezoelectric wall portions of the channels.

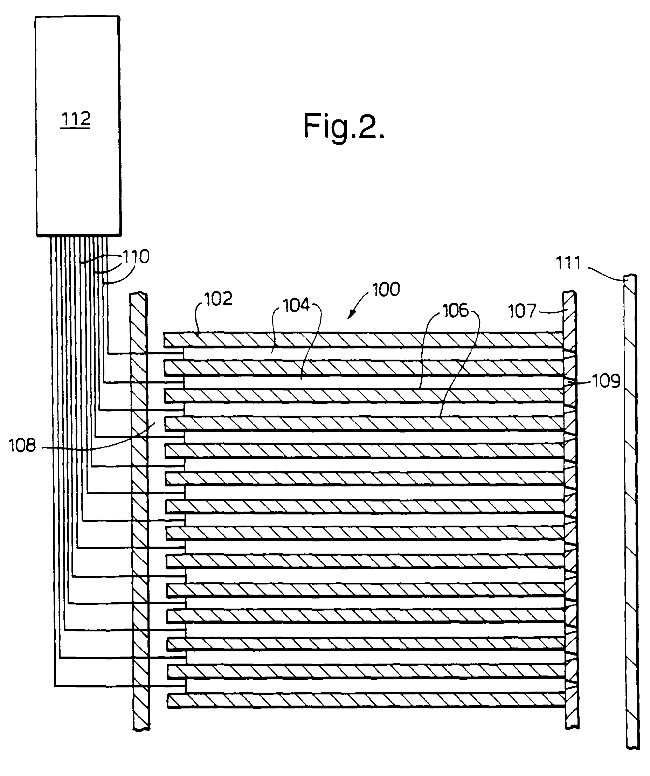

In US-A-4,887,100 there is described e.g. with reference to Figures 2(a) - (d), a form of printhead in which said displaceable piezoelectric wall portions comprise the channel dividing side wails. In this case, each of the channel dividing side walls is shared between the channels which it separates so that in a first of successive phases of operation it can be deflected together with the facing wall of one of the channels which it separates to eject a droplet from said one of the channels whilst in a succeeding phase of the operation the said channel dividing wall together with the facing side wall of the other of the channels which it separates can be deflected to eject a droplet from said other of the channels.

As explained in EP-A-0 422 870, printheads of the kind described can be employed according to this invention as greyscale (and, therefore, colour printers) by depositing in the area corresponding to each pixel a variable number of droplets, typically, in the range 1 to 64 at an operating frequency which, in the case of EP-A-0 422 870, is the longitudinal acoustic resonant frequency of the printhead channel.

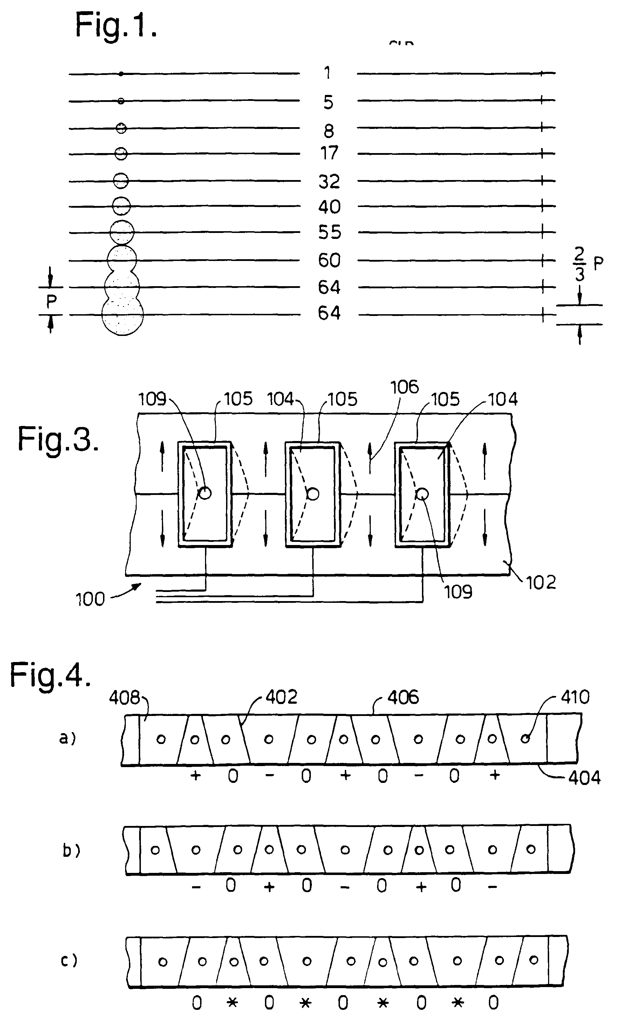

Figure 1 shows the effect of depositing a variable number of ink droplets between 1 and 64 in successive pixels as the paper moves past the nozzle. Typically, the maximum droplet production frequency is sufficient to generate 100 droplets per pixel, so that if 64 droplets are generated, these are deposited in a line occupying approximately ²/₃ of the pixel pitch "p". When smaller numbers of droplets are generated as a sequence these are deposited along correspondingly shorter lines.

The deposited lines of ink droplets in each pixel have time to collect and spread as dots of liquid ink on the paper surface. The line in which the droplets from any particular nozzle are deposited has little effect on the shape but only on the diameter of the dot formed at the pixel. Figure 1 shows that the relative timing of the deposition of the lines of droplets at the pixels is chosen so that each drop sequence is deposited symmetrically with respect to the corresponding pixel. This reduces any distortion in the image which could result in contouring and inhibits any tendency to merging of the droplets deposited at adjacent pixels.

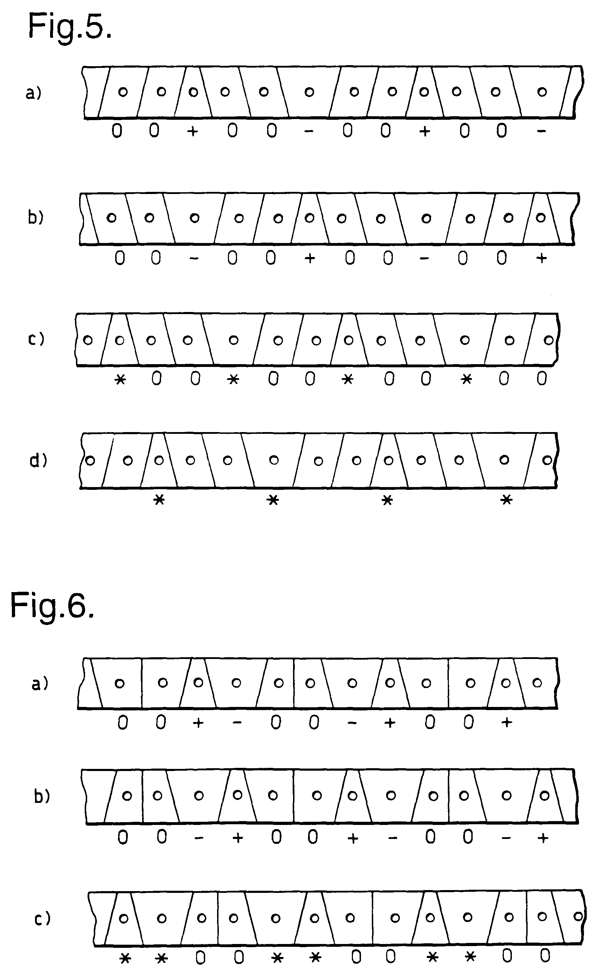

Referring now to Figures 2 and 3, there is illustrated therein a printhead 100, which is generally similar to that described in relation to Figures 2(a) to (d) of US-A-4,887,100, the contents of which are herein incorporated by reference. The printhead 100 comprises opposing sheets of piezoelectric material 102 poled in a direction normal thereto and formed with parallel grooves providing channels 104 at a density of two or more per millimetre having channel dividing side walls 106. The channels 104 are each lined with a metal electrode layer 105. The channels are actuated in shear mode by applying an electric potential difference between the electrode layer of an actuated channel and the electrode layers of the channels on either side of the actuated channel. The channel dividing side walls are displaced in generally chevron form, as shown in dotted outline in Figure 3. Of course this is only one example, and the side walls - in a variation - are constructed to displace in cantilever mode. Still further variations are disclosed in the art referred to and herein incorporated by reference.

The channels are supplied with printing liquid from a common supply duct 108 connected with each channel at the end thereof opposite that at which is located a nozzle plate 107 formed with respective nozzles 109 which terminate the channels. The nozzles are co-linearly disposed transversely to the direction of movement of a substrate 111, e.g. paper.

According to one aspect of the present invention, printheads of the type shown by way of example in Figures 2 and 3 are operated with their channels arranged in at least two cycles, the channels belonging to any one cycle being interleaved with channels belonging to another cycle, and the channels of each cycle being further arranged in first and second groups operating in antiphase.

It will be understood that a considerable number of strategies can be identified which embody this invention and some of these are shown diagrammatically in Figures 4-12. These figures simply show a printhead construction, such as that of Figures 2 and 3, in a stylised form. Piezoelectric side walls 402, transversely displaceable in shear mode, extend between a substrate 404 and a cover 406. Elongated ink channels 408 are thus defined, each terminating in a nozzle 410. The side walls 402 are depicted schematically as straight lines with displacement of a side wall being indicated through inclination of the straight line.

Parts (a) and (b) of each figure show the position of side walls of adjacent channels at different half periods of the operating frequency. The construction can therefore be imagined, in one cycle, to be oscillating between the positions depicted at (a) and (b), at the resonant or other operating frequency.

In any one cycle, the firing channels can be seen as oscillating between positive and negative pressure states, depicted as + and -, respectively. The channels belonging to the same group are all positive in (a) and negative in (b), and *vice versa*. Channels which do not belong to the currently enabled cycle are depicted as pressure state 0.

According to one aspect of the invention, firing channels belonging to first and second groups and assigned to a first cycle of operation are separated by intervening channels belonging to at least one other cycle. Figures 4 and 5 are particular examples and, as can be seen from these figures, the intervening channels are non-firing (ie. they see insufficient pressure change to eject a drop) by virtue of their walls moving in tandem. Accordingly, throughout the cycle, these channels show a pressure state 0. The change from operation in one cycle to operation in another cycle will take place after completion of an appropriate number of oscillations - perhaps one hundred - of the channel walls at the operating frequency, with drops then being ejected (still in antiphase between channels belonging to two separate groups) from those (previously inactive intervening) channels belonging to another cycle. It will be appreciated that the number of intervening channels will correspond to the number of cycles in which the printhead is to be operated; the arrangement of Figure 4 is a two-cycle operation whilst that shown in Figure 5 is a three-cycle operation. Part (c) of Figure 4 and parts (c) and (d) of Figure 5 show the firing/non-firing arrangement in the other respective cycles of Figures 4 and 5; firing channels are indicated by an asterisk, non-firing channels by zero.

The number of oscillations at the operating frequency of the walls of a channel - and thus the number of drops ejected from that channel - is determined by the required print density, as explained earlier in the description with reference to Figure 1. Whilst there may be a difference in timing of droplet ejection from channels belonging to first and second groups (operating in antiphase) within a cycle, this has negligible effect on the print quality if, as is generally the case, the operating frequency is high. It will be understood that if the walls are being actuated at the operating frequency to eject up to sixty-four drops, the error arising from droplet ejection being in anti-phase between neighbouring channels is one half in sixty-four, ie. less than one percent. This is negligible in terms of the error in the print after drop spreading.

The cycles of channels, on the other hand, are enabled at a lower, cycle-enabling frequency and the difference in timing between the bursts of droplets ejected from channels belonging to different cycles will generally be significant in comparison with the rate of relative substrate movement. This can be compensated for using a suitable method such as offset nozzles, known in the context of binary (single drop) printing eg. from the aforementioned US-A-4,887,100, or angling of the printhead, as disclosed in the context of binary printing in WO 95/07185. In the case where the substrate is not moving continuously but is held stationary until all cycles have printed and then indexed forward (known eg. from the aforementioned EP-A-0 422 870), such compensation is not necessary. If the movement of the substrate is appropriately controlled, pauses can be inserted within the sequence of cycle enabling.

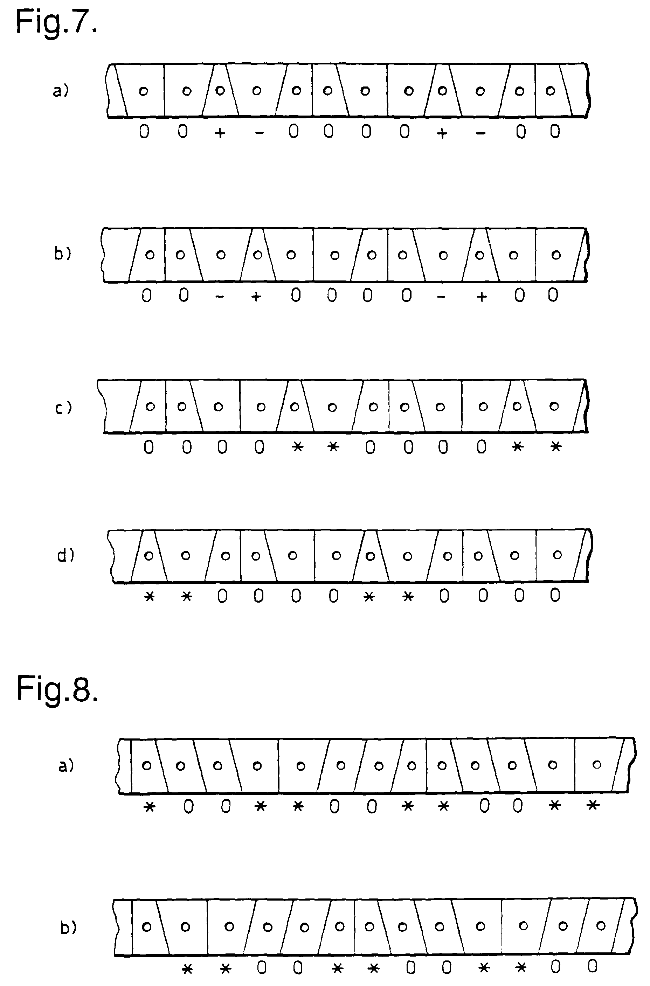

It is not essential for the side walls of a non-firing, interleaving channel to move in tandem to ensure that no drop ejection takes place. If a printhead is set up such that the inward deflection of both walls of a channel is required to eject a drop, then the movement of only one side wall of an intervening, non-firing channel will create pressure changes in the channel which, whilst they may be "non-zero", are nevertheless below the threshold required for drop ejection. Examples of this kind of operation in the context of the present invention are shown in Figures 6 and 7, corresponding to two-cycle and three-cycle operation accordingly. It will be noted that the firing channels have both side wails moving inwardly in one half cycle of the operating frequency (Figures 6(a), 7(a)) and outwardly in the next half cycle (Figures 6(b), 7(b)) to create positive and negative pressures. Again, the firing/non-firing arrangement of the channels in the other respective cycles is denoted by asterisks and zeros in Figure 6(c) and Figures 7(c) and (d).

However, the present invention is also applicable to the case where a printhead is set up such that the deflection of only one wall of a channel is sufficient to eject a droplet from that channel and Figures 8-11 give an example of this kind of operation in the context of the present invention. Non-firing of intervening channels is achieved by moving the wails such that any pressure generated in the respective channels lies below the threshold required for drop ejection; in the embodiments of Figures 8-11 this is achieved by moving both side walls of a channel substantially in tandem. These two conditions lead to the further requirement, discernable in Figures 8-11, that the channels assigned to a particular cycle comprise pairs of adjacent channels.

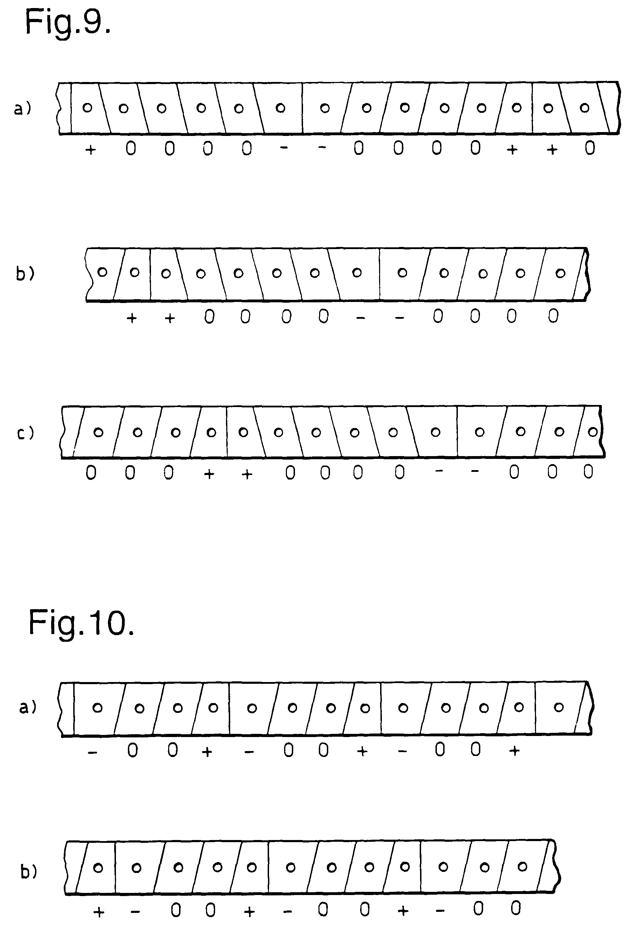

Each pair can be made up of channels belonging to the same group - as shown in Figures 8 and 9 - in which case substantially equal pressures will exist either side of the channel wall separating the channels of the pair, the wall remaining stationary (and unactuated). Figure 8 shows a two-cycle embodiment of this arrangement with first and second cycles being shown in Figures 8(a) and 8(b) respectively. It will be seen that the location of the aforementioned stationary wall switches from cycle to cycle. Within a cycle, the channel walls will of course oscillate from one position to another in the same manner as shown in the (a) and (b) embodiments of Figures 4-7 and this, of course, holds true for all the Figures 8-11. Figure 9 shows a three-cycle embodiment of the arrangement in which the location of the stationary wall switches between three locations corresponding to each of the three cycles (shown in Figures 9(a), (b) and (c) respectively).

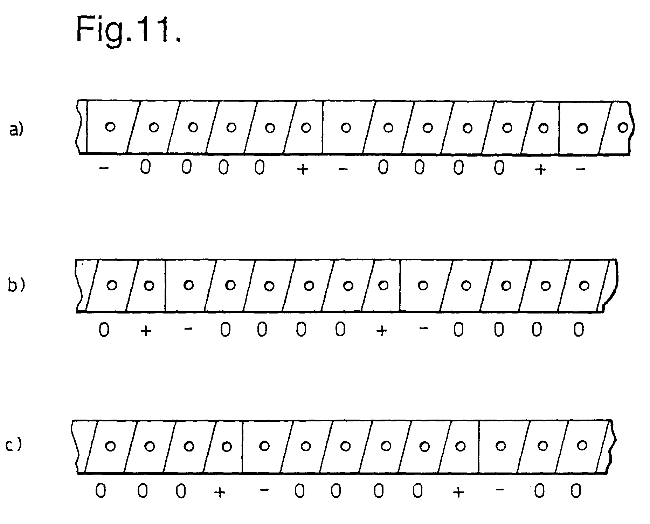

Figures 10 and 11 correspond to the situation where each pair is made up of channels belonging to different groups. Because of the opposite pressures existing either side of the separating channel wall of each pair, this wall has to be actuated such that it remains substantially stationary despite the pressure difference acting across it. Two and three cycle embodiments of this arrangement are shown in Figures 10(a), (b) and 11(a), (b), (c) respectively, the location of the "stationary" walls of each pair switching from cycle to cycle in the same manner as Figures 7 and 8.

The above description has been given in terms of pressure magnitude and phases because it is the pressure wave magnitude that primarily controls the drop ejection process. It will be in the normal capability of the skilled man to then choose voltages to be applied to the printhead, whose magnitudes generate required pressures. In the arrangement described in the patents incorporated herein by reference, a single electrode is provided in each channel and it is accordingly the difference in voltages applied to successive channels that controls the potential difference applied to the piezoelectric side wall which separates them. As set forth in EP-A-0 553 153, the calculation of voltages required to produce specified pressure changes will take into account the compliance of the wall actuators.

It will be understood that the present invention is not restricted in the number of cycles that may be employed; four cycles may be used in addition to the two and three cycle arrangements described explicitly above. In the limit, the number of cycles may correspond to half the total number of actuable channels in the printhead, only two channels (belonging to first and second groups respectively) being operated in each cycle.

Similarly, the only restriction on the operating and cycle-enabling frequencies is that the operating frequency must be higher than the cycle-enabling frequency.

Similarly, adjacent channels belonging to different cycles need not be actuated in the successive (a-b-c) manner shown, for example, in Figures 7, 9 and 11.

It will be appreciated that although Figures 4-11 show all available channels in a cycle operating, this need not be the case and will actually be determined by the print data. If the print data is such that a channel is not required to print during a particular cycle, or if a channel is required to eject fewer drops than other channels actuated in that cycle, then the walls bounding that channel will be actuated such that the pressures generated in the channel will lie below the threshold for drop ejection for all or part of the cycle.

The present invention is, as mentioned earlier, applicable to colour printing. To this end, arrays of channels may be arranged in a set of sets of four rows of channels, the rows of each set being respectively supplied with black ink and ink of the three primary colours and disposing the rows of each set such that they print a row of printing element areas extending transversely to the direction of relative motion of the respective array and the substrate so that each area printed can be printed in black ink or ink of one of the three primary colours. Alternatively, the arrays may be arranged co-linearly, each area to be printed passing under each of the arrays in successive passes of the substrate past the array assembly.

Whilst specific reference has been made to apparatus as described in commonly assigned United States Patent No. 4,887,100, the present invention is applicable to a wide range of ink jet apparatus in which a channel dividing side wall is displaceable in either of two opposing directions. Moreover, some of (but not all) the advantages set forth above can be enjoyed by applying the present invention to drop-on-demand ink jet apparatus employing other electrically actuable means to eject droplets.

## Claims

1. A method of multi-tone printing employing a drop-on-demand ink jet apparatus (100) comprising an array of parallel channels (104; 408), a series of nozzles (109; 410) which communicate respectively with said channels for ejection of ink therefrom, a source of ink connected with each channel, and electrically actuable means (106;402) associated with the channels for applying pressure pulses to the channels, thereby to effect ink ejection therefrom;
the channels being arranged in at least two cycles, the channels belonging to any one cycle being interleaved with channels belonging to another cycle;
the channels of each cycle being further arranged in first and second groups, the method comprising the steps of
receiving print data;
successively enabling the cycles for ink ejection at a cycle enabling frequency;
for each cycle, selecting channels of the respective first and second groups for ink ejection in accordance with print data;
and actuating the electrically actuable means to apply sequences of pressure pulses to the selected channels at an operating frequency higher than said cycle enabling frequency, the number of pulses applied being varied to control the print density in accordance with the print data;
the pressure pulses applied to selected channels belonging to said first group being applied in antiphase to those applied to selected channels belonging to said second group;
thereby to effect ink ejection from said selected channels in antiphase between the first and second groups.

2. Method according to Claim 1, wherein said electrically actuable means apply pressure pulses to the channels by displacement of side wall portions of said channels.

3. Method according to Claim 2, wherein ink ejection is effected by displacement of respective piezoelectric side wall portions of said channels.

4. Method according to any previous claim, wherein each channel belonging to a given cycle is separated in the array from the next, successive channel of that cycle by a channel assigned to another cycle.

5. Method according to Claim 4, wherein each channel belonging to a given cycle is separated in the array from the next, successive channel of said given cycle by channels assigned respectively to two other cycles.

6. Method according to Claim 4 or 5, wherein a channel of a cycle and the next, successive channel in the array belonging to the same cycle belong to different groups within that cycle.

7. Method according to Claim 6, when the dependent on Claims 2 or 3, wherein the movement of the walls of those channels belonging to cycles that are not enabled is substantially identical.

8. Method according to any of Claims 1-3, wherein two adjacent channels of the array belong to the same cycle.

9. Method according to Claim 8, wherein said two adjacent channels belong to the same group.

10. Method according to Claim 8, wherein said two adjacent channels belong to different groups.

11. Method according to any of Claims 8-10, wherein said two adjacent channels are separated in the array from the next, successive channels of that cycle by channels assigned to another cycle.

12. Method according to any one of Claims 8-11, when dependent on Claims 2 or 3, wherein during the enablement of a cycle, the movement of the walls of those channels belonging to non-enabled cycles is substantially identical.

13. Method according to any of Claims 8-11, when dependent on Claims 2 and 3, wherein during the enablement of a cycle, each of those channels belonging to non-enabled cycles has a wall that is substantially stationary.

14. A method according to any one of the preceding claims, wherein the ink jet apparatus comprises a plurality of arrays of channels, each array connected to a source of ink of a different colour.

15. The method according to Claim 14, comprising the step of arranging the arrays of channels in a set or sets of four rows of channels, the rows of each set being respectively supplied with black ink and ink of the three primary colours and disposing the rows of each set for printing a row of printing element areas extending transversely to the direction of relative motion of the array and the substrate so that each area printed can be printed in black ink or ink of any of the three primary colours.

16. A method according to Claim 14, wherein the plurality of arrays are co-linear.

17. A method of multi-tone printing employing drop-on-demand ink jet apparatus (100) comprising an array of parallel channels (104;408); a series of nozzles (109;410) which communicate respectively with said channels for the ejection of ink therefrom; ink source means connected with the channels; and a plurality of electrically actuable means (106;402), each electrically actuable means being associated with two of the said channels and each of said channels having two electrically actuable means corresponding thereto; each electrically actuable means being actuable in opposite senses to apply positive pressure to either one of the two channels with which it is associated and negative pressure to the other of the said two channels, a pressure pulse exceeding a defined ejection pressure threshold in any channel resulting in ink ejection from that channel; the method comprising the steps of arranging the channels in at least two cycles, arranging the channels of each cycle into two groups; receiving print data; successively enabling said cycles for ink ejection; for each cycle, selecting channels of the respective first and second groups for ink ejection in accordance with the print data and actuating electrically actuable means associated therewith to apply sequences of pressure pulses to the selected channels, the number of pulses applied being varied to control the print density in accordance with the print data, the pressure pulses applied to selected channels in said first group being in antiphase at an operating frequency to those applied to selected channels belonging to said second group, thereby to effect ink ejection from said selected channels in antiphase between the first and second groups, channels not in the currently enabled cycle receiving compensating positive and negative pressures from the two electrically actuable means corresponding thereto.

18. A method according to Claim 17, wherein the electrically actuable means comprise respective channel dividing side walls with the two said side walls corresponding to a channel serving to bound that channel.

19. A method according to Claim 18, wherein the channel dividing side walls comprise piezoelectric material.

20. A method according to any one of Claims 17 to 19, wherein the two side walls bounding a channel not belonging to the currently enabled cycle are caused to move in tandem.

21. A method according to any one of the preceding claims, wherein the operating frequency is not less than ¹/₃ the longitudinal acoustic resonant frequency of the channels.

22. A method according to Claim 21, wherein the operating frequency is not less than ½ the longitudinal acoustic resonant frequency of the channels.

## Patentansprüche

1. Verfahren zum Drucken mit mehreren Werten, das eine Tintenstrahlvorrichtung (100) verwendet, die auf Anforderung Tropfen zur Verfügung stellt und ein Feld von parallelen Kanälen (104; 408), eine Reihe von Düsen (109; 410), die jeweils mit den Kanälen kommunizieren, zum Ausstoß von Tinte aus diesen, eine Quelle für Tinte, die mit jedem Kanal verbunden ist, und elektrisch betätigbare Mittel (106; 402) umfasst, die den Kanälen zugeordnet sind, um an die Kanäle Druckimpulse anzulegen, wodurch der Ausstoß von Tinte aus diesen bewirkt wird;
wobei die Kanäle in mindestens zwei Folgen angeordnet sind und die Kanäle, die zu einer beliebigen ersten Folge gehören, mit Kanälen verschachtelt sind, die zu einer anderen Folge gehören;
wobei die Kanäle von jeder Folge außerdem in ersten und zweiten Gruppen angeordnet sind, welches Verfahren die folgenden Schritte umfasst:
es werden Druckdaten empfangen;
die Folgen werden zum Tintenausstoß mit einer Zyklusfreigabefrequenz nacheinander freigegeben;
in Abhängigkeit von den Druckdaten werden für jede Folge Kanäle von den jeweiligen ersten und zweiten Gruppen zum Tintenausstoß ausgewählt;
und die elektrisch betätigbaren Mittel werden betätigt, um an die ausgewählten Kanäle Sequenzen von Druckimpulsen mit einer Betriebsfrequenz, die größer ist als die Zyklusfreigabefrequenz, anzulegen, wobei die Anzahl von angelegten Impulsen variiert wird, um die Druckdichte in Abhängigkeit von den Druckdaten zu steuern;
wobei die Druckimpulse, die an die ausgewählten Kanäle angelegt werden, die zu der ersten Gruppe gehören, in Antiphase zu denjenigen angelegt werden, die an die ausgewählten Kanäle angelegt werden, die zu der zweiten Gruppe gehören;
um auf diese Weise den Ausstoß von Tinte aus den ausgewählten Kanälen in Antiphase zwischen den ersten und zweiten Gruppen zu bewirken.

2. Verfahren nach Anspruch 1, bei dem die elektrisch betätigbaren Mittel an die Kanäle Druckimpulse durch Verschiebung von Seitenwandabschnitten der Kanäle anlegen.

3. Verfahren nach Anspruch 2, bei dem der Tintenausstoß durch Verschiebung von jeweiligen piezoelektrischen Seitenwandabschnitten der Kanäle bewirkt wird.

4. Verfahren nach einem der vorhergehenden Ansprüche, bei dem jeder Kanal, der zu einer vorgegebenen Folge gehört, in dem Feld von dem nächsten darauffolgenden Kanal dieser Folge mit Hilfe eines Kanals getrennt wird, der einer anderen Folge zugeordnet ist.

5. Verfahren nach Anspruch 4, bei dem jeder Kanal, der zu einer vorgegebenen Folge gehört, in dem Feld von dem nächsten darauffolgenden Kanal der vorgegebenen Folge mit Hilfe von Kanälen getrennt wird, die jeweils zwei anderen Zyklen zugeordnet sind.

6. Verfahren nach Anspruch 4 oder 5, bei dem ein Kanal einer Folge und der nächste darauffolgende Kanal in dem Feld, die zu derselben Folge gehören, zu verschiedenen Gruppen innerhalb dieser Folge gehören.

7. Verfahren nach Anspruch 6, wenn dieser von Anspruch 2 oder 3 abhängt, bei dem die Bewegung der Wände derjenigen Kanäle, die zu Folgen gehören, die nicht freigegeben bzw. betätigt werden, im wesentlichen identisch ist.

8. Verfahren nach einem der Ansprüche 1 bis 3, bei dem zwei benachbarte Kanäle des Feldes zu derselben Folge gehören.

9. Verfahren nach Anspruch 8, bei dem zwei benachbarte Kanäle zu derselben Folge gehören.

10. Verfahren nach Anspruch 8, bei der zwei benachbarte Kanäle zu verschiedenen Gruppen gehören.

11. Verfahren nach einem der Ansprüche 8 bis 10, bei dem die zwei benachbarten Kanäle in dem Feld von dem nächsten darauffolgenden Kanälen dieser Folge mit Hilfe von Kanälen getrennt werden, die einer anderen Folge zugeordnet sind.

12. Verfahren nach einem der Ansprüche 8 bis 11, wenn diese von den Ansprüchen 2 oder 3 abhängen, bei dem während der Freigabe bzw. Betätigung einer Folge die Bewegung der Wände derjenigen Kanäle, die zu nicht freigegebenen bzw. nicht betätigten Folgen gehören, im wesentlichen gleich ist.

13. Verfahren nach einem der Ansprüche 8 bis 11, wenn diese von den Ansprüchen 2 und 3 abhängen, bei dem während der Freigabe bzw. Betätigung einer Folge jeder von denjenigen Kanälen, die zu nicht freigegebenen bzw. nicht betätigten Folgen gehören, eine Wand aufweist, die im wesentlichen ortsfest ist.

14. Verfahren nach einem der vorhergehenden Ansprüche, bei dem die Tintenstrahlvorrichtung eine Anzahl von Feldern von Kanälen umfasst, wobei jedes Feld mit einer Quelle für Tinte von einer anderen Farbe verbunden ist.

15. Verfahren nach Anspruch 14, umfassend die Schritte, dass die Felder von Kanälen in einem Satz oder in Sätzen aus vier Reihen von Kanälen angeordnet werden, dass die Reihen von jedem Satz jeweils mit schwarzer Tinte bzw. Tinte für die drei Grundfarben versorgt werden, und dass die Reihen von jedem Satz zum Drucken einer Reihe von Druckelementbereichen angeordnet werden, die sich transversal zu der Richtung der Relativbewegung des Feldes und des Substrats erstreckt, so dass jeder gedruckte Bereich in schwarzer Tinte oder in Tinte mit einer beliebigen der drei Grundfarben gedruckt werden kann.

16. Verfahren nach Anspruch 14, bei dem die Anzahl von Feldern kollinear ist.

17. Verfahren zum Drucken mit mehreren Werten, das eine Tintenstrahlvorrichtung (100) verwendet, die auf Anforderung einen Tropfen bereitstellt und ein Feld von parallelen Kanälen (104; 408); eine Reihe von Düsen (109; 410), die jeweils mit den Kanälen kommunizieren, zum Ausstoß von Tinte aus diesen; ein mit den Kanälen verbundenes Tintenquellenmittel; und eine Anzahl von elektrisch betätigbaren Mitteln (106; 402) umfasst, wobei jedes elektrisch betätigbare Mittel zweien der Kanäle zugeordnet ist und jeder der genannten Kanäle zwei elektrisch betätigbare Mittel aufweist, die diesen entsprechen; wobei jedes elektrisch betätigbare Mittel in entgegengesetzte Richtungen betätigbar bzw. verschiebbar ist, um einen positiven Druck an einen von den zwei Kanälen anzulegen, dem dieses zugeordnet ist, und um einen negativen Druck an den anderen von den zwei genannten Kanälen anzulegen, wobei ein Druckimpuls, der einen definierten Ausstoßdruck-Schwellenwert überschreitet, in einem beliebigen Kanal im Ausstoß von Tinte aus diesem Kanal resultiert; welches Verfahren die Schritte umfasst, dass die Kanäle in mindestens zwei Folgen angeordnet werden, wobei die Kanäle von jeder Folge in zwei Gruppen angeordnet werden; dass Druckdaten empfangen werden; dass die Folgen zum Tintenausstoß nacheinander betätigt bzw. freigegeben werden; dass für jede Folge Kanäle von denjeweiligen ersten und zweiten Gruppen zum Tintenausstoß in Abhängigkeit von den Druckdaten ausgewählt werden und dass elektrisch betätigbare Mittel, die diesen zugeordnet sind, betätigt werden, um an die ausgewählten Kanäle Sequenzen von Druckimpulsen anzulegen, wobei die Anzahl von angelegten Impulsen variiert wird, um die Druckdichte in Abhängigkeit von den Druckdaten zu steuern, wobei die Druckimpulse, die an ausgewählte Kanäle in der ersten Gruppe angelegt werden, bei einer Betriebsfrequenz in Antiphase zu denjenigen stehen, die an ausgewählte Kanäle angelegt werden, die zu der zweiten Gruppe gehören, um auf diese Weise einen Tintenausstoß aus den ausgewählten Kanälen in Antiphase zwischen den ersten und zweiten Gruppen zu bewirken, wobei Kanäle, die sich nicht in der augenblicklich freigegebenen bzw. betätigten Folge befinden, von den zwei elektrisch betätigbaren Mitteln, die diesen entsprechen, kompensierende positive und negative Drücke erhalten.

18. Verfahren nach Anspruch 17, bei dem die elektrisch betätigbaren Mittel jeweils Kanalunterteilungsseitenwände mit den zwei Seitenwänden umfassen, die einem Kanal entsprechen, der dazu dient, um diesen Kanal zu begrenzen.

19. Verfahren nach Anspruch 18, bei dem die Kanalunterteilungsseitenwände ein piezoelektrisches Material umfassen.

20. Verfahren nach einem der Ansprüche 17 bis 19, bei dem die zwei Seitenwände, die einen Kanal begrenzen und nicht zu der augenblicklich freigegebenen bzw. betätigten Folge gehören, dazu veranlasst werden, sich gemeinsam zu bewegen.

21. Verfahren nach einem der vorhergehenden Ansprüche, bei dem die Betriebsfrequenz nicht weniger als 1/3 der longitudinalen akustischen Resonanzfrequenz der Kanäle beträgt.

22. Verfahren nach Anspruch 21, bei dem die Betriebsfrequenz nicht weniger als ½ der longitudinalen akustischen Resonanzfrequenz der Kanäle beträgt.

## Revendications

1. Procédé pour l'impression multiteintes faisant appel à un appareil à jet d'encre d'éjection à la demande (100) comprenant une série de canaux parallèles (104 ;408), une série de tuyères (109 ;410) qui communiquent respectivement avec les canaux pour l'éjection de l'encre, une source d'encre raccordée à chaque canal et des moyens actionnables électriquement (106 ;402) associés aux canaux pour appliquer des impulsions de pression aux canaux de façon à effectuer l'éjection d'encre à partir de ceux-ci ;
les canaux étant disposés dans au moins deux cycles, les canaux appartenant à l'un quelconque de ces deux cycles étant imbriqués avec les canaux faisant partie de l'autre cycle ;
les canaux de chaque cycle étant imbriqués avec les canaux faisant partie de l'autre cycle ;
les canaux de chaque cycle étant de plus disposés dans des premier et second groupes, le procédé comprenant les étapes consistant à
recevoir les données d'impression ;
valider successivement les cycles pour l'éjection d'encre à une fréquence de validation de cycle ;
pour chaque cycle, sélectionner les canaux des premier et second groupes respectifs pour l'éjection d'encre en fonction des données d'impression ;
et actionner les moyens électriquement actionnables pour appliquer les séquences d'impulsions de pression aux canaux sélectionnés à une fréquence opérante supérieure à la fréquence de validation de cycle, le nombre d'impulsions appliquées étant variable pour commander la densité d'impression en fonction des données d'impression ;
les impulsions de pression appliquées aux canaux sélectionnés faisant partie du premier groupe étant appliqués en antiphase par rapport à ceux appliqués aux canaux sélectionnés faisant partie du second groupe ;
permettant ainsi d'effectuer l'éjection d'encre à partir des canaux sélectionnés en antiphase entre les premier et second groupes.

2. Procédé selon la revendication 1, dans lequel les moyens électriquement actionnables appliquent des impulsions de pression aux canaux par déplacement des portions de paroi latérale des canaux.

3. Procédé selon la revendication 2, par lequel l'éjection d'encre est effectuée par déplacement de portions de paroi latérale piézo-électrique respective des canaux.

4. Procédé selon l'une quelconque des revendications précédentes, dans lequel chaque canaux faisant partie d'un cycle donné est séparé dans la série du canal successif suivant de ce cycle par un canal affecté à un autre cycle.

5. Procédé selon la revendication 4, dans lequel chaque canal faisant partie d'un cycle donné est séparé dans la série du canal successif suivant du cycle donné par des canaux affectés respectivement à deux autres cycles.

6. Procédé selon la revendication 4 ou 5, dans lequel un canal d'un cycle et le canal successif suivant dans la série faisant partie du même cycle font partie de différents groupes à l'intérieur de ce cycle.

7. Procédé selon la revendication 6, dans lequel en dépendance des revendications 2 ou 3, dans lequel le mouvement des parois de ces canaux faisant partie des cycles qui ne sont pas validés est sensiblement identique.

8. Procédé selon l'une quelconque des revendications 1-3, dans lequel deux canaux contigus de la série font partie du même cycle.

9. Procédé selon la revendication 8, dans lequel les deux canaux contigus font partie du même groupe.

10. Procédé selon la revendication 8, dans lequel deux canaux contigus font partie de groupes différents.

11. Procédé selon l'une quelconque des revendications 8-10, dans lequel les deux canaux contigus sont séparés dans la série des canaux successifs suivants de ce cycle par des canaux affectés à un autre cycle.

12. Procédé selon l'une quelconque des revendications 8-11 en dépendance des revendications 2-3, dans lequel pendant la validation d'un cycle, le mouvement des parois des canaux faisant partie de cycles non validés est sensiblement identique.

13. Procédé selon l'une quelconque des revendications 8-11, en dépendance des revendications 2-3, dans lequel pendant la validation d'un cycle, chacun des canaux faisant partie de cycles non validés possède une paroi qui est sensiblement stationnaire.

14. Procédé selon l'une quelconque des revendications précédentes, dans lequel l'appareil à jet d'encre comprend une pluralité de série de canaux, chaque série étant raccordée à une source d'encre d'une couleur différente.

15. Procédé selon la revendication 14, comprenant l'étape consistant à disposer les séries de canaux en un jeu ou des jeux de quatre rangées de canaux, les rangées de chaque jeu étant respectivement alimentées en encre noire et en encre des trois couleurs primaires et en disposant les rangées de chaque série pour l'impression d'une rangée de zone d'éléments d'impression s'étendant transversalement à la direction du mouvement relatif de la série et du substrat de sorte que chaque zone imprimée peut être imprimée en encre noire ou en encre de l'une quelconque des trois couleurs primaires.

16. Procédé selon la revendication 14, dans lequel les différentes séries sont co-linéaires.

17. Procédé d'impression multiteintes faisant appel à un appareil à jet d'encre d'éjection à la demande (100) comprenant une série de canaux parallèles (104 ;408) ; une série de tuyères (109 ;410) qui communiquent respectivement avec les canaux pour l'éjection de l'encre ; des moyens de source d'encre raccordés aux canaux, une pluralité de moyens actionnables électriquement (106 ;402), chaque moyen actionnable électriquement étant affecté à deux des canaux et chacun des canaux ayant deux moyens actionnables électriquement correspondant à ceux-ci; chaque moyen actionnable électriquement pouvant être actionné dans les sens opposés pour appliquer une pression positive à l'un ou l'autre des deux canaux auquel il est associé et une pression négative à l'autre des deux canaux, une impulsion de pression dépassant un seuil de pression d'éjection défini dans tout canal entraînant une éjection d'encre à partir de ce canal ; le procédé comprenant les étapes consistant à disposer les canaux dans au moins deux cycles, à disposer les canaux de chaque cycle en deux groupes ; à recevoir les données d'impression ; à valider successivement les cycles pour l'éjection d'encre ; pour chaque cycle, sélectionner les canaux des premier et second groupes respectifs pour l'éjection d'encre en fonction des données d'impression et actionner électriquement les moyens actionnables associés à ceux-ci pour appliquer les séquences d'impulsion de pression aux canaux sélectionnés, le nombre d'impulsions appliquées étant variable pour commander la densité d'encre en fonction des données d'impression, les impulsions de pression appliquées aux canaux sélectionnés dans le premier groupe étant en antiphase à une fréquence opérante à ceux appliqués aux canaux sélectionnés faisant partie du second groupe, permettant ainsi d'effectuer une éjection d'encre à partir des canaux sélectionnés en antiphase entre les premier et second groupes, les canaux n'étant pas dans le cycle validé au moment actuel recevant des pressions négatives et positives de compensation en provenance des moyens actionnables électriquement correspondant à ceux-ci.

18. Procédé selon la revendication 17, dans lequel les moyens actionnables électriquement comprennent des parois latérales de division de canal respectif avec les deux parois latérales correspondant à un canal servant à contenir ce canal.

19. Procédé selon la revendication 18, dans lequel les parois latérales divisant le canal consistent en un matériau piézo-électrique.

20. Procédé selon l'une quelconque des revendications 17 à 19, dans lequel les deux parois latérales contenant un canal ne faisant pas partie du cycle validé au moment actuel sont mis en déplacement en tandem.

21. Procédé selon l'une quelconque des revendications précédentes, dans lequel la fréquence opérante n'est pas inférieure à ¹/₃ de la fréquence résonnante acoustique longitudinale du canal.

22. Procédé selon la revendication 21, dans lequel la fréquence opérante n'est pas inférieure à la moitié de la fréquence résonnante acoustique longitudinale des canaux 12.
